# EUROPEAN PATENT SPECIFICATION

(11) **EP 2 813 026 B1**
(45) Date of publication and mention of the grant of the patent: **19.06.2019**
(21) Application number: 13705667.7
(22) Date of filing: 06.02.2013
(51) Int. Cl.: H04L 5/00

(54) **RESOURCE ALLOCATION FOR ENHANCED PHYSICAL DOWNLINK CONTROL CHANNEL (EPDCCH)**
RESSOURCENZUWEISUNG FÜR EPDCCH
ATTRIBUTION DE RESSOURCES POUR CANAL DE COMMANDE EN LIAISON DESCENDANTE PHYSIQUE AMÉLIORÉ (EPDCCH)

(30) Priority: 07.02.2012 US 201261596036 P; 05.02.2013 US 201313759410
(43) Date of publication of application: 17.12.2014
(73) Proprietor: Qualcomm Incorporated, San Diego, CA 92121-1714 (US)
(72) Inventor: CHEN, Wanshi, San Diego, California 92121 (US); GAAL, Peter, San Diego, California 92121 (US); XU, Hao, San Diego, California 92121 (US)
(74) Representative: Wegner, Hans
(86) International application number: PCT/US2013/024808
(87) International publication number: WO 2013/119588

(56) References cited:
- PANASONIC: "Channels and signals for additional carrier type", 3GPP DRAFT; R1-120220, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 31 January 2012 (2012-01-31), XP050562777, [retrieved on 2012-01-31]
- ERICSSON ET AL: "Discussion on design principles for additional carrier types", 3GPP DRAFT; R1-112925, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 4 October 2011 (2011-10-04), XP050538135, [retrieved on 2011-10-04]
- HUAWEI ET AL: "Additional carrier types â motivations and issues", 3GPP DRAFT; R1-112893, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 4 October 2011 (2011-10-04), XP050538107, [retrieved on 2011-10-04]
- SAMSUNG: "Avoidance of DMRS collision with PSS and SSS", 3GPP DRAFT; R1-110088, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dublin, Ireland; 20110117, 11 January 2011 (2011-01-11), XP050490058, [retrieved on 2011-01-11]

## Description

The present Application for Patent claims priority to U.S. Provisional Application No. 61/596,036, entitled "INTERACTION OF EPDCCH WITH PBCH/PSS/SSS IN LTE-A," filed February 07, 2012, and assigned to the assignee hereof.

### BACKGROUND

### I. Field

Certain aspects of the disclosure generally relate to wireless communications and, more particularly, to techniques for allocating resources for Enhanced Physical Downlink Control Channel (EPDCCH).

### II. Background

Wireless communication networks are widely deployed to provide various communication services such as voice, video, packet data, messaging, broadcast, etc. These wireless networks may be multiple-access networks capable of supporting multiple users by sharing the available network resources. Examples of such multiple-access networks include Code Division Multiple Access (CDMA) networks, Time Division Multiple Access (TDMA) networks, Frequency Division Multiple Access (FDMA) networks, Orthogonal FDMA (OFDMA) networks and Single-Carrier FDMA (SC-FDMA) networks.

A wireless communication network may include a number of base stations that can support communication for a number of user equipments (UEs). A UE may communicate with a base station via the downlink and uplink. The downlink (or forward link) refers to the communication link from the base station to the UE, and the uplink (or reverse link) refers to the communication link from the UE to the base station.

A base station may transmit data and control information on the downlink to a UE and/or may receive data and control information on the uplink from the UE. For example, PANASONIC: "Channels and signals for additional carrier type", 3GPP Draft, R1-120220, vol. RAN WG1, Dresden. Germany. 6-10 February 2012 is concerned with control signaling on extension carriers. On the downlink, a transmission from the base station may observe interference due to transmissions from neighbor base stations. On the uplink, a transmission from the UE may cause interference to transmissions from other UEs communicating with the neighbor base stations. The interference may degrade performance on both the downlink and uplink.

### SUMMARY

The invention is defined by the subject-matter of the independent claims 1, 9, 10, 11 and 12. Preferred embodiments are defined in the dependent claims. Aspects or embodiments that do not fall under the scope of the claims are useful to understand the invention.

Certain aspects of the present disclosure provide a method of wireless communications by a User Equipment (UE). The method generally includes determining at least one decoding candidate for Enhanced Physical Downlink Control Channel (EPDCCH) in a subframe, determining whether or not the resources corresponding to the at least one EPDCCH decoding candidate can potentially collide with resources used for transmitting at least one of a Primary Synchronization Signal (PSS), Secondary Synchronization Signal (SSS) or a Physical Broadcast Channel (PBCH) in the subframe, and processing the at least one EPDCCH decoding candidate based on the determination of potential resource collision.

Certain aspects of the present disclosure provide an apparatus for wireless communications. The apparatus generally includes means for determining at least one decoding candidate for Enhanced Physical Downlink Control Channel (EPDCCH) in a subframe, means for determining whether or not the resources corresponding to the at least one EPDCCH decoding candidate can potentially collide with resources used for transmitting at least one of a Primary Synchronization Signal (PSS), Secondary Synchronization Signal (SSS) or a Physical Broadcast Channel (PBCH) in the subframe, and means for processing the at least one EPDCCH decoding candidate based on the determination of potential resource collision.

Certain aspects of the present disclosure provide an apparatus for wireless communications. The apparatus generally includes at least one processor and a memory coupled to the at least one processor. The at least one processor is generally configured to determine at least one decoding candidate for Enhanced Physical Downlink Control Channel (EPDCCH) in a subframe, determine whether or not the resources corresponding to the at least one EPDCCH decoding candidate can potentially collide with resources used for transmitting at least one of a Primary Synchronization Signal (PSS), Secondary Synchronization Signal (SSS) or a Physical Broadcast Channel (PBCH) in the subframe, and process the at least one EPDCCH decoding candidate based on the determination of potential resource collision.

Certain aspects of the present disclosure provide a computer program product for wireless communications. The computer program product generally includes a computer-readable medium comprising code for determining at least one decoding candidate for Enhanced Physical Downlink Control Channel (EPDCCH) in a subframe, determining whether or not the resources corresponding to the at least one EPDCCH decoding candidate can potentially collide with resources used for transmitting at least one of a Primary Synchronization Signal (PSS), Secondary Synchronization Signal (SSS) or a Physical Broadcast Channel (PBCH) in the subframe, and processing the at least one EPDCCH decoding candidate based on the determination of potential resource collision.

Certain aspects of the present disclosure provide a method for wireless communications by a Base Station (BS). The method generally includes determining potential collision conditions for each of a set of decoding candidates for transmitting Enhanced Physical Downlink Control Channel (EPDCCH) in a subframe, selecting at least one EPDCCH decoding candidate from the set based on the determination, and transmitting an EPDCCH on the selected EPDCCH decoding candidate.

Certain aspects of the present disclosure provide an apparatus for wireless communications. The apparatus generally includes means for determining potential collision conditions for each of a set of decoding candidates for transmitting Enhanced Physical Downlink Control Channel (EPDCCH) in a subframe, means for selecting at least one EPDCCH decoding candidate from the set based on the determination, and means for transmitting an EPDCCH on the selected EPDCCH decoding candidate.

Certain aspects of the present disclosure provide an apparatus for wireless communications. The apparatus generally includes at least one processor and a memory coupled to the at least one processor. The at least one processor is generally configured to determine potential collision conditions for each of a set of decoding candidates for transmitting Enhanced Physical Downlink Control Channel (EPDCCH) in a subframe, select at least one EPDCCH decoding candidate from the set based on the determination, and transmit an EPDCCH on the selected EPDCCH decoding candidate.

Certain aspects of the present disclosure provide a computer program product for wireless communications. The computer program product generally includes a computer-readable medium comprising code for determining potential collision conditions for each of a set of decoding candidates for transmitting Enhanced Physical Downlink Control Channel (EPDCCH) in a subframe, selecting at least one EPDCCH decoding candidate from the set based on the determination, and transmitting an EPDCCH on the selected EPDCCH decoding candidate.

### BRIEF DESCRIPTION OF THE DRAWINGS

FIG. 1 is a block diagram conceptually illustrating an example of a wireless communications network in accordance with certain aspects of the present disclosure.
FIG. 2 is a block diagram conceptually illustrating an example of a frame structure in a wireless communications network in accordance with certain aspects of the present disclosure.
FIG. 2A shows an example format for the uplink in Long Term Evolution (LTE) in accordance with certain aspects of the present disclosure.
FIG. 3 shows a block diagram conceptually illustrating an example of a Node B in communication with a user equipment device (UE) in a wireless communications network in accordance with certain aspects of the present disclosure.
FIG. 4 illustrates DMRS patterns as defined in Rel-10 for the normal cyclic prefix case, in accordance with certain aspects of the present disclosure.
FIG. 5 illustrates resource configuration for PSS, SSS and PBCH in an LTE frame, in accordance with certain aspects of the present disclosure.
FIG. 6 illustrates example operations that may be performed by a User Equipment (UE) for monitoring and decoding EPDCCH, in accordance with certain aspects of the present disclosure.
FIG. 7 illustrates example operations that may be performed by a Base Station (BS) for transmitting EPDCCH, in accordance with certain aspects of the present disclosure.

### DETAILED DESCRIPTION

The techniques described herein may be used for various wireless communication networks such as CDMA, TDMA, FDMA, OFDMA, SC-FDMA and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM®, etc. UTRA and E-UTRA are part of Universal Mobile Telecommunication System (UMTS). 3GPP Long Term Evolution (LTE) and LTE-Advanced (LTE-A) are new releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). The techniques described herein may be used for the wireless networks and radio technologies mentioned above as well as other wireless networks and radio technologies. For clarity, certain aspects of the techniques are described below for LTE/LTE-A, and LTE/LTE-A terminology is used in much of the description below.

### Example Wireless Network

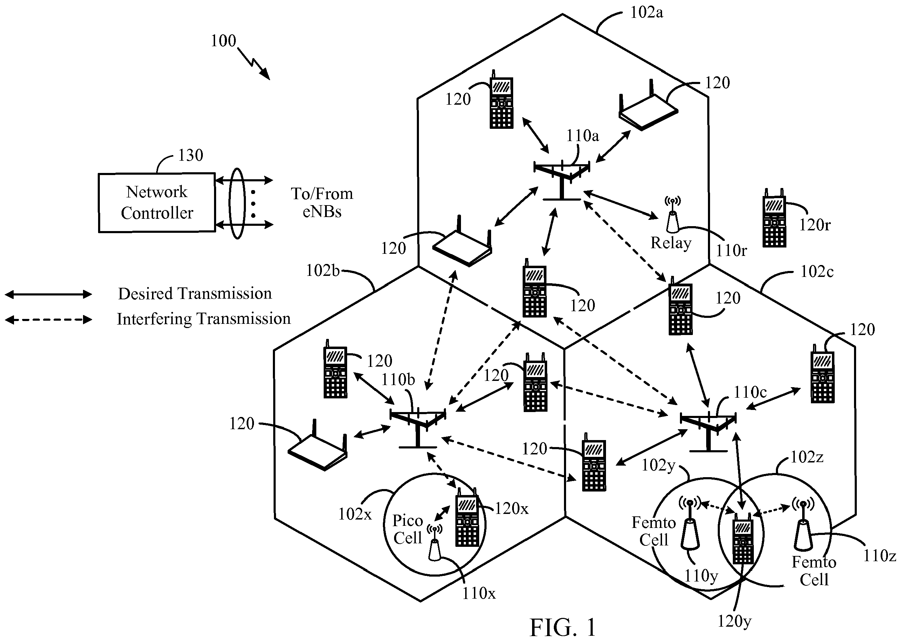

**FIG. 1** shows a wireless communication network 100, which may be an LTE network. The wireless network 100 may include a number of evolved Node Bs (eNBs) 110 and other network entities. An eNB may be a station that communicates with user equipment devices (UEs) and may also be referred to as a base station, a Node B, an access point, etc. Each eNB 110 may provide communication coverage for a particular geographic area. In 3GPP, the term "cell" can refer to a coverage area of an eNB and/or an eNB subsystem serving this coverage area, depending on the context in which the term is used.

An eNB may provide communication coverage for a macro cell, a pico cell, a femto cell, and/or other types of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a Closed Subscriber Group (CSG), UEs for users in the home, etc.). An eNB for a macro cell may be referred to as a macro eNB (i.e., a macro base station). An eNB for a pico cell may be referred to as a pico eNB (i.e., a pico base station). An eNB for a femto cell may be referred to as a femto eNB (i.e., a femto base station) or a home eNB. In the example shown in FIG. 1, eNBs 110a, 110b, and 110c may be macro eNBs for macro cells 102a, 102b, and 102c, respectively. eNB 110x may be a pico eNB for a pico cell 102x. eNBs 110y and 110z may be femto eNBs for femto cells 102y and 102z, respectively. An eNB may support one or multiple (e.g., three) cells.

The wireless network 100 may also include relay stations. A relay station is a station that receives a transmission of data and/or other information from an upstream station (e.g., an eNB or a UE) and sends a transmission of the data and/or other information to a downstream station (e.g., a UE or an eNB). A relay station may also be a UE (e.g. UE relay station) that relays transmissions for other UEs. In the example shown in FIG. 1, a relay station 110r may communicate with eNB 110a and a UE 120r in order to facilitate communication between eNB 110a and UE 120r. A relay station may also be referred to as a relay eNB, a relay, etc.

The wireless network 100 may be a heterogeneous network (HetNet) that includes eNBs of different types, e.g., macro eNBs, pico eNBs, femto eNBs, relays, etc. These different types of eNBs may have different transmit power levels, different coverage areas, and different impact on interference in the wireless network 100. For example, macro eNBs may have a high transmit power level (e.g., 20 watts) whereas pico eNBs, femto eNBs, and relays may have a lower transmit power level (e.g., 1 watt).

The wireless network 100 may support synchronous or asynchronous operation. For synchronous operation, the eNBs may have similar frame timing, and transmissions from different eNBs may be approximately aligned in time. For asynchronous operation, the eNBs may have different frame timing, and transmissions from different eNBs may not be aligned in time. The techniques described herein may be used for both synchronous and asynchronous operation.

A network controller 130 may couple to a set of eNBs and provide coordination and control for these eNBs. The network controller 130 may communicate with eNBs 110 via a backhaul. The eNBs 110 may also communicate with one another, e.g., directly or indirectly via wireless or wireline backhaul.

The UEs 120 (e.g., 120x, 120y) may be dispersed throughout the wireless network 100, and each UE may be stationary or mobile. A UE may also be referred to as a terminal, a mobile station, a subscriber unit, a station, etc. A UE may be a cellular phone, a smart phone, a personal digital assistant (PDA), a wireless modem, a wireless communication device, a handheld device, a laptop/notebook computer, a cordless phone, a wireless local loop (WLL) station, a tablet, etc. A UE may be able to communicate with macro eNBs, pico eNBs, femto eNBs, relays, etc. In FIG. 1, a solid line with double arrows indicates desired transmissions between a UE and a serving eNB, which is an eNB designated to serve the UE on the downlink and/or uplink. A dashed line with double arrows indicates interfering transmissions between a UE and an eNB. For certain aspects, the UE may comprise an LTE Release 10 UE.

LTE utilizes orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, K may be equal to 128, 256, 512, 1024, or 2048 for system bandwidth of 1.25, 2.5, 5, 10, or 20 megahertz (MHz), respectively. The system bandwidth may also be partitioned into subbands. For example, a subband may cover 1.08 MHz, and there may be 1, 2, 4, 8, or 16 subbands for system bandwidth of 1.25, 2.5, 5, 10, or 20 MHz, respectively.

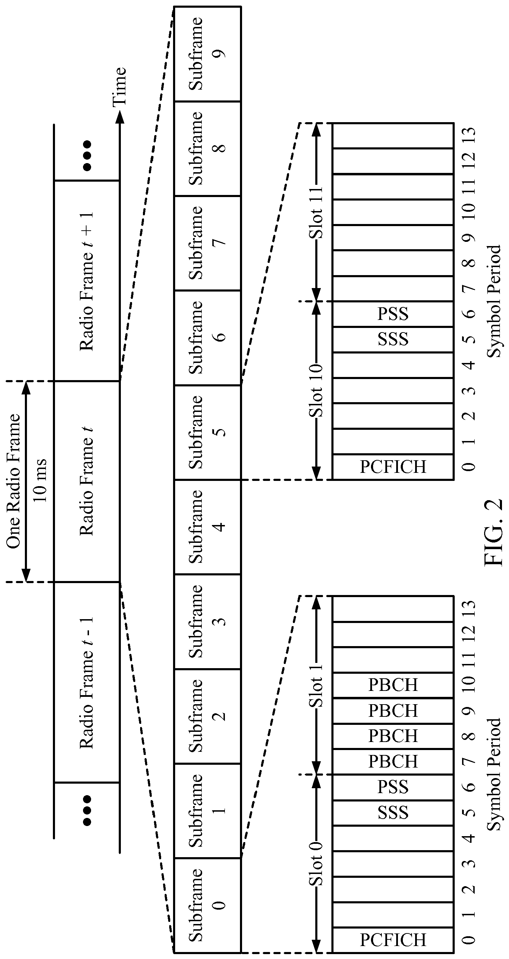

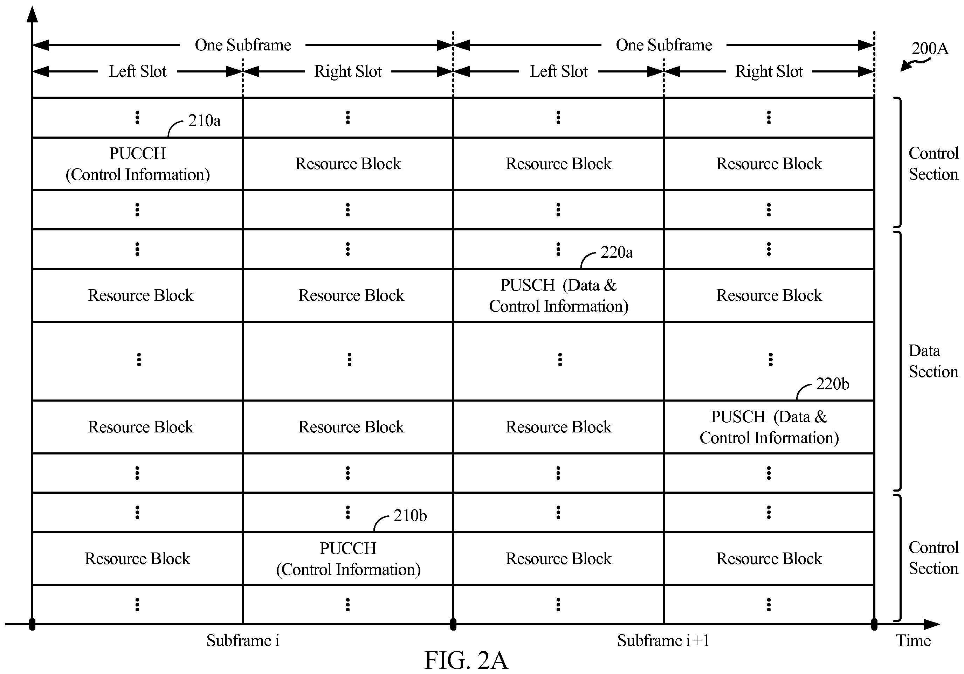

**FIG. 2** shows a frame structure used in LTE. The transmission timeline for the downlink may be partitioned into units of radio frames. Each radio frame may have a predetermined duration (e.g., 10 milliseconds (ms)) and may be partitioned into 10 subframes with indices of 0 through 9. Each subframe may include two slots. Each radio frame may thus include 20 slots with indices of 0 through 19. Each slot may include L symbol periods, e.g., L = 7 symbol periods for a normal cyclic prefix (as shown in FIG. 2) or L = 6 symbol periods for an extended cyclic prefix. The 2L symbol periods in each subframe may be assigned indices of 0 through 2L-1. The available time frequency resources may be partitioned into resource blocks. Each resource block may cover N subcarriers (e.g., 12 subcarriers) in one slot.

In LTE, an eNB may send a primary synchronization signal (PSS) and a secondary synchronization signal (SSS) for each cell in the eNB. The primary and secondary synchronization signals may be sent in symbol periods 6 and 5, respectively, in each of subframes 0 and 5 of each radio frame with the normal cyclic prefix, as shown in FIG. 2. The synchronization signals may be used by UEs for cell detection and acquisition. The eNB may send a Physical Broadcast Channel (PBCH) in symbol periods 0 to 3 in slot 1 of subframe 0. The PBCH may carry certain system information.

The eNB may send a Physical Control Format Indicator Channel (PCFICH) in the first symbol period of each subframe, as shown in FIG. 2. The PCFICH may convey the number of symbol periods (M) used for control channels, where M may be equal to 1, 2, or 3 and may change from subframe to subframe. M may also be equal to 4 for a small system bandwidth, e.g., with less than 10 resource blocks. The eNB may send a Physical HARQ Indicator Channel (PHICH) and a Physical Downlink Control Channel (PDCCH) in the first M symbol periods of each subframe (not shown in FIG. 2). The PHICH may carry information to support hybrid automatic repeat request (HARQ). The PDCCH may carry information on resource allocation for UEs and control information for downlink channels. The eNB may send a Physical Downlink Shared Channel (PDSCH) in the remaining symbol periods of each subframe. The PDSCH may carry data for UEs scheduled for data transmission on the downlink. The various signals and channels in LTE are described in 3GPP TS 36.211, entitled "Evolved Universal Terrestrial Radio Access (E-UTRA); Physical Channels and Modulation," which is publicly available.

The eNB may send the PSS, SSS, and PBCH in the center 1.08 MHz of the system bandwidth used by the eNB. The eNB may send the PCFICH and PHICH across the entire system bandwidth in each symbol period in which these channels are sent. The eNB may send the PDCCH to groups of UEs in certain portions of the system bandwidth. The eNB may send the PDSCH to specific UEs in specific portions of the system bandwidth. The eNB may send the PSS, SSS, PBCH, PCFICH, and PHICH in a broadcast manner to all UEs, may send the PDCCH in a unicast manner to specific UEs and may also send the PDSCH in a unicast manner to specific UEs.

A number of resource elements may be available in each symbol period. Each resource element may cover one subcarrier in one symbol period and may be used to send one modulation symbol, which may be a real or complex value. Resource elements not used for a reference signal in each symbol period may be arranged into resource element groups (REGs). Each REG may include four resource elements in one symbol period. The PCFICH may occupy four REGs, which may be spaced approximately equally across frequency, in symbol period 0. The PHICH may occupy three REGs, which may be spread across frequency, in one or more configurable symbol periods. For example, the three REGs for the PHICH may all belong in symbol period 0 or may be spread in symbol periods 0, 1, and 2. The PDCCH may occupy 9, 18, 32, or 64 REGs, which may be selected from the available REGs, in the first M symbol periods. Only certain combinations of REGs may be allowed for the PDCCH.

A UE may know the specific REGs used for the PHICH and the PCFICH. The UE may search different combinations of REGs for the PDCCH. The number of combinations to search is typically less than the number of allowed combinations for the PDCCH. An eNB may send the PDCCH to the UE in any of the combinations that the UE will search.

**FIG. 2A** shows an exemplary format 200A for the uplink in LTE. The available resource blocks for the uplink may be partitioned into a data section and a control section. The control section may be formed at the two edges of the system bandwidth and may have a configurable size. The resource blocks in the control section may be assigned to UEs for transmission of control information. The data section may include all resource blocks not included in the control section. The design in FIG. 2A results in the data section including contiguous subcarriers, which may allow a single UE to be assigned all of the contiguous subcarriers in the data section.

A UE may be assigned resource blocks in the control section to transmit control information to an eNB. The UE may also be assigned resource blocks in the data section to transmit data to the eNB. The UE may transmit control information in a Physical Uplink Control Channel (PUCCH) 210a, 210b on the assigned resource blocks in the control section. The UE may transmit only data or both data and control information in a Physical Uplink Shared Channel (PUSCH) 220a, 220b on the assigned resource blocks in the data section. An uplink transmission may span both slots of a subframe and may hop across frequency as shown in FIG. 2A.

A UE may be within the coverage of multiple eNBs. One of these eNBs may be selected to serve the UE. The serving eNB may be selected based on various criteria such as received power, pathloss, signal-to-noise ratio (SNR), etc.

A UE may operate in a dominant interference scenario in which the UE may observe high interference from one or more interfering eNBs. A dominant interference scenario may occur due to restricted association. For example, in FIG. 1, UE 120y may be close to femto eNB 110y and may have high received power for eNB 110y. However, UE 120y may not be able to access femto eNB 110y due to restricted association and may then connect to macro eNB 110c with lower received power (as shown in FIG. 1) or to femto eNB 110z also with lower received power (not shown in FIG. 1). UE 120y may then observe high interference from femto eNB 110y on the downlink and may also cause high interference to eNB 110y on the uplink.

A dominant interference scenario may also occur due to range extension, which is a scenario in which a UE connects to an eNB with lower pathloss and lower SNR among all eNBs detected by the UE. For example, in FIG. 1, UE 120x may detect macro eNB 110b and pico eNB 110x and may have lower received power for eNB 1 10x than eNB 110b. Nevertheless, it may be desirable for UE 120x to connect to pico eNB 1 10x if the pathloss for eNB 110x is lower than the pathloss for macro eNB 110b. This may result in less interference to the wireless network for a given data rate for UE 120x.

According to certain aspects, communication in a dominant interference scenario may be supported by having different eNBs operate on different frequency bands. A frequency band is a range of frequencies that may be used for communication and may be given by (i) a center frequency and a bandwidth or (ii) a lower frequency and an upper frequency. A frequency band may also be referred to as a band, a frequency channel, etc. The frequency bands for different eNBs may be selected such that a UE can communicate with a weaker eNB in a dominant interference scenario while allowing a strong eNB to communicate with its UEs. An eNB may be classified as a "weak" eNB or a "strong" eNB based on the received power of signals from the eNB received at a UE (and not based on the transmit power level of the eNB).

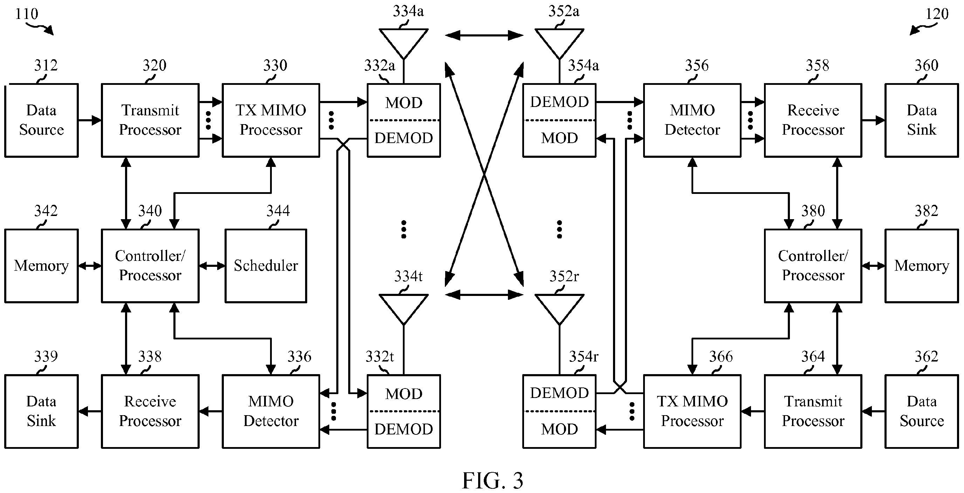

**FIG. 3** is a block diagram of a design of a base station or an eNB 110 and a UE 120, which may be one of the base stations/eNBs and one of the UEs in FIG. 1. For a restricted association scenario, the eNB 110 may be macro eNB 110c in FIG. 1, and the UE 120 may be UE 120y. The eNB 110 may also be a base station of some other type. The eNB 110 may be equipped with T antennas 334a through 334t, and the UE 120 may be equipped with R antennas 352a through 352r, where in general T ≥ 1 and R > 1.

At the eNB 110, a transmit processor 320 may receive data from a data source 312 and control information from a controller/processor 340. The control information may be for the PBCH, PCFICH, PHICH, PDCCH, etc. The data may be for the PDSCH, etc. The transmit processor 320 may process (e.g., encode and symbol map) the data and control information to obtain data symbols and control symbols, respectively. The transmit processor 320 may also generate reference symbols, e.g., for the PSS, SSS, and cell-specific reference signal. A transmit (TX) multiple-input multiple-output (MIMO) processor 330 may perform spatial processing (e.g., precoding) on the data symbols, the control symbols, and/or the reference symbols, if applicable, and may provide T output symbol streams to T modulators (MODs) 332a through 332t. Each modulator 332 may process a respective output symbol stream (e.g., for OFDM, etc.) to obtain an output sample stream. Each modulator 332 may further process (e.g., convert to analog, amplify, filter, and upconvert) the output sample stream to obtain a downlink signal. T downlink signals from modulators 332a through 332t may be transmitted via T antennas 334a through 334t, respectively.

At the UE 120, antennas 352a through 352r may receive the downlink signals from the eNB 110 and may provide received signals to demodulators (DEMODs) 354a through 354r, respectively. Each demodulator 354 may condition (e.g., filter, amplify, downconvert, and digitize) a respective received signal to obtain input samples. Each demodulator 354 may further process the input samples (e.g., for OFDM, etc.) to obtain received symbols. A MIMO detector 356 may obtain received symbols from all R demodulators 354a through 354r, perform MIMO detection on the received symbols, if applicable, and provide detected symbols. A receive processor 358 may process (e.g., demodulate, deinterleave, and decode) the detected symbols, provide decoded data for the UE 120 to a data sink 360, and provide decoded control information to a controller/processor 380.

On the uplink, at the UE 120, a transmit processor 364 may receive and process data (e.g., for the PUSCH) from a data source 362 and control information (e.g., for the PUCCH) from the controller/processor 380. The transmit processor 364 may also generate reference symbols for a reference signal. The symbols from transmit processor 364 may be precoded by a TX MIMO processor 366 if applicable, further processed by modulators 354a through 354r (e.g., for SC-FDM, etc.), and transmitted to the eNB 110. At the eNB 110, the uplink signals from the UE 120 may be received by the antennas 334, processed by the demodulators 332, detected by a MIMO detector 336 if applicable, and further processed by a receive processor 338 to obtain decoded data and control information sent by the UE 120. The receive processor 338 may provide the decoded data to a data sink 339 and the decoded control information to the controller/processor 340.

The controllers/processors 340 and 380 may direct the operation at the eNB 110 and the UE 120, respectively. The controller/processor 340, receive processor 338, and/or other processors and modules at the eNB 110 may perform or direct operations 800 in FIG. 8 and/or other processes for the techniques described herein. The memories 342 and 382 may store data and program codes for the eNB 110 and the UE 120, respectively. A scheduler 344 may schedule UEs for data transmission on the downlink and/or uplink. eNB 110 may transmit static resource partitioning information (SPRI) 390 to UE 120. UE120 may transmit sounding reference signals (SRS) 392 to eNB110.

### Example Resource Allocation for EPDCCH

In existing wireless communications systems (e.g., so called "legacy" LTE Rel-8/9/10 systems), PDCCH is located in the first several symbols of an LTE subframe. The PDCCH is generally distributed across the entire bandwidth of the subframe and is time division multiplexed with PDSCH. In other words, the subframe is effectively divided into a control region and a data region, and the PDCCH occupies the first several symbols of the control region.

An enhanced PDCCH (EPDCCH) may be defined, for example, in non-legacy systems (e.g., Rel-12) which may complement or replace the legacy PDCCH. Unlike the legacy PDCCH which occupies the control region of the subframe in which it is transmitted, the EPDCCH generally occupies the data region of the subframe, similar to the legacy PDSCH. In other words, an EPDCCH region may be defined that occupies the conventional/legacy PDSCH region. The EPDCCH region may consist of multiple contiguous or non-contiguous Resource Blocks (RBs) and may occupy a subset of OFDM symbols within those RBs.

The EPDCCH may have several advantages over the legacy PDCCH. For example, the EPDCCH may help increase control channel capacity (e.g., and may add to the capacity of the legacy PDCCH), support frequency-domain Inter-Cell Interference Cancellation (ICIC), achieve improved spatial reuse of control channel resource, support beamforming and/or diversity, operate on a New Carrier Type (NCT) and in Multicast-Broadcast Single Frequency Network (MBSFN) subframes, and/or coexist on a same carrier as legacy UEs.

According to certain aspects, UE-specific demodulation reference signals (DMRSs) may be used for downlink channel estimation for coherent demodulation of the PDSCH/EPDCCH. According to certain aspects, to provide good channel estimation for the PDSCH/EPDCCH, each RB carrying the PDSCH/EPDCCH may include sufficient DMRS for good channel estimation within the RB.

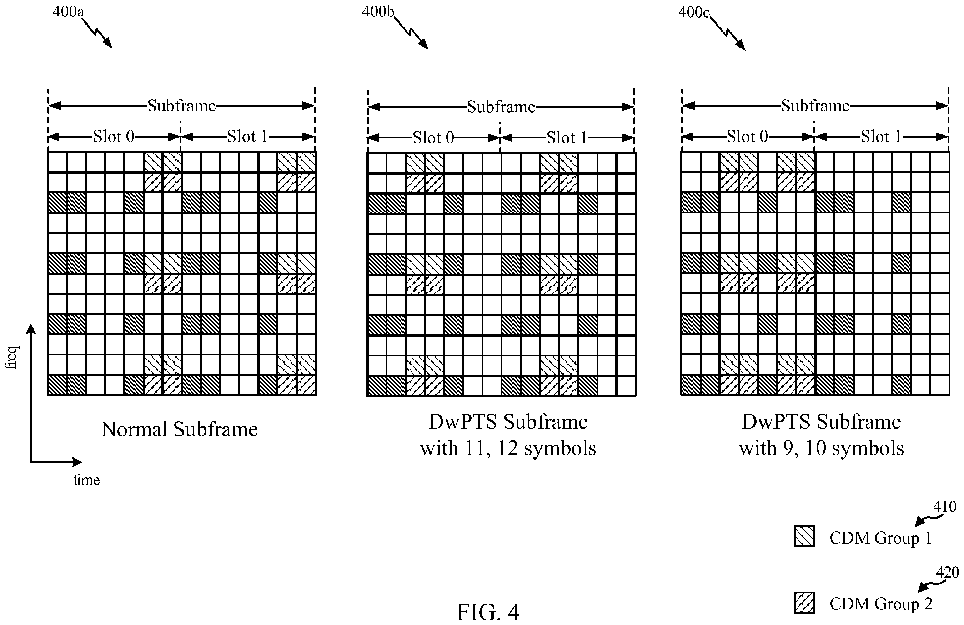

**FIG. 4** illustrates example DMRS patterns 400a-c, as defined in Rel-10 for the normal cyclic prefix case, that may be used in accordance with certain aspects of the present disclosure.

As illustrated, resource elements (REs) 410 and 420 are allocated for DMRS transmissions. In the illustrated example, REs 410 are used for CDM Group 1 and REs 420 are used for CDM Group 2. As shown in FIG. 4, the DMRS occupies the sixth and seventh symbols of each of the first and second slots of the subframe.

DMRS pattern 400a shows a DMRS pattern for a normal subframe. As used herein, the term normal subframe is a relative term, referring to a subframe that does not have a Downlink Pilot Time Slot (DwPTS), a special downlink timeslot that typically occurs in certain subframes (e.g., the 2^{nd} or 7^{th} subframe in a radio frame, depending on a subframe configuration) when LTE is operated in Time Division Duplex (TDD). The length of DwPTS subframes is variable, to allow for different DownLink- UpLink switching periods to be configured.

DMRS pattern 400b shows an example DMRS pattern for a DwPTS subframe with 11 or 12 symbols. As shown in this example, the DMRS occupies the third and fourth symbols of each of the first and second slots of the subframe. DMRS pattern 400c shows a DMRS pattern for a DwPTS subframe with 9, 10 symbols. As shown in this example, the DMRS occupies the third, fourth, sixth and seventh symbols of the, first slot of the subframe.

In legacy systems (e.g., Rel-8/9/10), the Primary Synchronization Signal (PSS) and the Secondary Synchronization Signal (SSS) are generally transmitted in the center six RBs only in subframes 0 and 5 (e.g., as shown in FIG. 2). The Primary Broadcast Channel (PBCH) is also generally transmitted in the center six RBs but only in subframe 0.

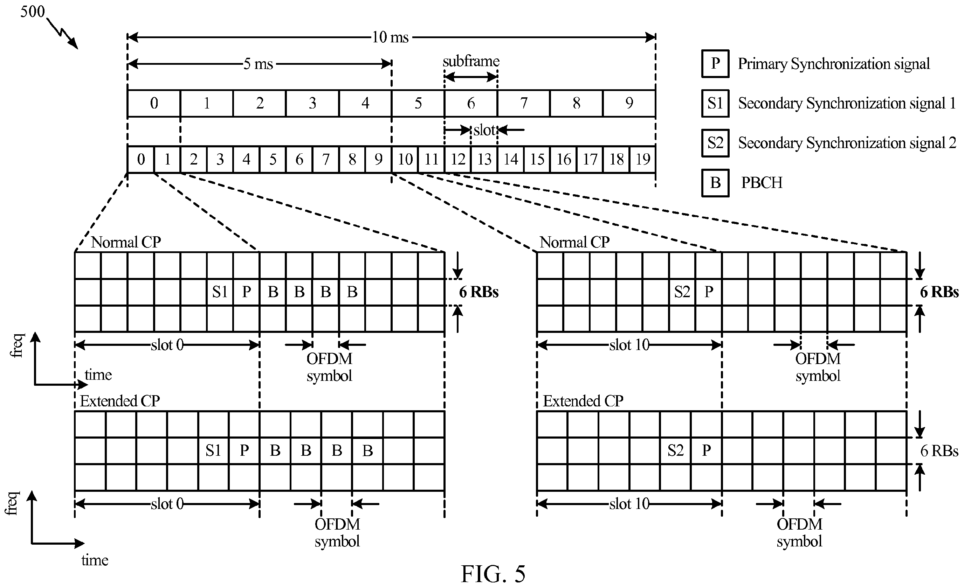

**FIG. 5** illustrates an example resource configuration 500 for PSS, SSS and PBCH in an LTE frame, in accordance with certain aspects of the present disclosure. As shown in FIG. 5, an LTE frame of 10ms long is typically divided in to ten subframes each 1ms long. Each subframe may further be divided in to two slots slot 0 and slot 1. As shown, PSS and SSS are typically transmitted every 5ms in subframes 0 and 5. The PSS and SSS are transmitted back to back in the last two symbols of the first slot in the subframes 0 and 5. Typically SSS is transmitted before PSS.

According to certain aspects of the present disclosure, as shown in FIG. 5, in order to differentiate the 10ms boundary, the two SSS signals, SSS1 (subframe 0) and SSS2 (subframe 5) may have different arrangements. The PSS arrangement, however, may be fixed. PBCH is transmitted every 10ms in the first four symbols of the second slot of subframe 0. According to certain aspects, the above defined PSS/SSS/PBCH configuration is used for FDD transmission.

According to certain aspects, for TDD transmissions, the SSS may be transmitted in the last symbol of subframes 0 and 5, and the PSS may be transmitted in the third symbol of subframes 1 and 6.

Referring back to FIG. 4, according to certain aspects, since the DMRS may use at least some of the same resources (e.g., symbols and/or REs) allocated to PSS and SSS, the transmission of PSS and SSS can potentially collide with DM-RS in subframes 0 and 5 when transmitted in the center six RBs. For example, since PSS and SSS may be transmitted in the last two symbols of slot 1 (refer FIG. 5), they may potentially collide with DMRS which (as noted in FIG. 4) may be allocated on the same two symbols.

According to current specifications (e.g., current LTE specifications), for subframes in the center six RBs having PSS, SSS and/or PBCH, DMRS-based EPDCCH is not supported. Thus, in subframes containing PSS, SSS or PBCH, a UE cannot expect to receive DMRS-based PDSCH or EPDCCH. For example, even if the UE supports DMRS-based EPDCCH, it may not expect to receive DMRS PRBs overlapping with PSS, SSS, or PBCH. Thus, such a UE may drop DMRS in subframes in which it collides with PSS, SSS or PBCH. This may lead to performance issues for PDSCH and/or EPDCCH.

For a legacy carrier type (e.g., Rel-8), not being able to use resources from the center six RBs in subframes 0 and 5 for DMRS-based PDSCH or EPDCCH may not of great concern, since Cell-Specific Reference Signal (CRS) based PDSCH and legacy PDCCH may still utilize these resources. For example, the REs not used by PSS, SSS or PBCH may be used by CRS based PDSCH.

However, certain legacy and non-legacy systems may only support DMRS-based transmissions with no support for CRS based transmissions. For example, according to certain aspects, non-legacy systems (e.g., Rel-12) may define a New carrier type (NCT). The NCT may be standalone or an extension carrier, for example, designed to achieve enhanced spectral efficiency, improve support for heterogeneous networks, and/or improve energy efficiency. The NCT may be "bandwidth agnostic" from the physical layer perspective, with at least reduced or eliminated legacy control signaling and/or CRS at least one the downlink (e.g., for Time Division Duplex (TDD), on the downlink subframes on a carrier). Thus, according to certain aspects, the NCT may not support CRS based PDSCH or PDCCH, and may only support DMRS-based PDSCH and EPDCCH.

This may be a serious concern, since the entire downlink subframe (e.g., subframes 0 and 5) in the data region for the center six RBs may be empty (except for PSS, SSS, and PBCH)-in the cases where DMRS-based PDSCH or EPDCCH cannot be transmitted. This may lead to a significant waste of resources. This issue may be even more pronounced when a control transmission completely relies on EPDCCH (i.e., with no reliance on PDCCH). In addition, for a narrow band operation, such as where the system supports only the center 6RBs (e.g., from a UE's perspective), the UE can never be scheduled for a corresponding uplink, since the subframes cannot carry EPDCCH. For a larger bandwidth, UL maybe scheduled with EPDCCH not colliding with PSS/SSS/PBCH.

As noted above, the NCT may be associated with a backward compatible carrier (as an extension) or may be a standalone carrier. According to certain aspects, for Frequency Division Duplex (FDD), a downlink carrier of the new type may be linked with a legacy uplink carrier. For TDD, a carrier may contain downlink subframes of the new type and legacy uplink subframes.

One possible solution to the collision problem for systems with larger bandwidths that only support DMRS-based transmissions, is to not allocate DMRS or DMRS-based transmissions (e.g., EPDCCH) in the center six RBs. According to certain aspects, the EPDCCH may come from RBS other than the center six RBs. However, this solution may not work for systems with narrow bandwidth. In addition, the resource wastage issue still persists.

Certain aspects of the present disclosure, however, provide techniques for systems that support only DMRS-based transmissions, for at least partially utilizing resources in the center six RBs of subframes 0 and 5 for DMRS-based transmissions (e.g., EPDCCH), while avoiding collision with PSS, SSS or PBCH.

According to certain aspects, the DMRS pattern (e.g., as noted in FIG. 4) may be re-defined to avoid collisions with PSS, SSS or PBCH. According to certain aspects, the DMRS pattern may be moved from the sixth and seventh symbols in the first slot to the second and third symbols in the first slot. In an alternative aspect, the DMRS pattern may be moved to the third and fourth symbols in the first slot.

According to certain aspects, a punctured DMRS pattern may be used. The punctured DMRS pattern may allow DMRS-based EPDCCH transmission in the center six RBs in subframes 0 and 5, but only based on the DMRS in the sixth and the seventh symbols in the second slot.

According to certain aspects, the PSS or SSS may be punctured by EPDCCH (in other words, resources that would have otherwise been used for PSS or SSS may be used for EPDCCH). According to certain aspects, EPDCCH may be allowed for transmission in some of the center six RBs used by the PSS or SSS, wherein EPDCCH will override the PSS and SSS in these RBs. According to certain aspects, the PSS and/or SSS may rely on the remaining RBs.

According to certain aspects, the pattern for PSS, SSS and PBCH (e.g., as shown in FIG. 5) may be re-designed, for example, at least for NCTs. According to certain aspects, the resource allocation for the PSS, SSS and/or PBCH may be re-defined to avoid collision with DMRS and DMRS-based transmissions (e.g., EPDCCH). For example, the PBCH may be moved to the first four symbols in the first slot. The PSS and SSS may be moved to the third and fourth symbols in the second slot. According to certain aspects, the different placements of PSS and SSS in the backward compatible carriers and the new carriers may help in early detection of the new type of carriers by the UE. In addition, the new placement may also prevent legacy UEs from accessing the new carrier.

According to certain aspects, cross-carrier scheduling may be employed. According to certain aspects, a carrier with EPDCCH issues may be cross-carrier scheduled by another carrier. For example, a 1.4MHz carrier may be cross-carrier scheduled by another carrier of 5MHz, when both carriers are configured for a UE. However, it may be noted that although the cross-carrier scheduling may address uplink scheduling concerns, it still does not address concerns for downlink PDSCH. For downlink PDSCH, one or more of the above discussed techniques may have to be used. In addition, the center six RBs are still wasted.

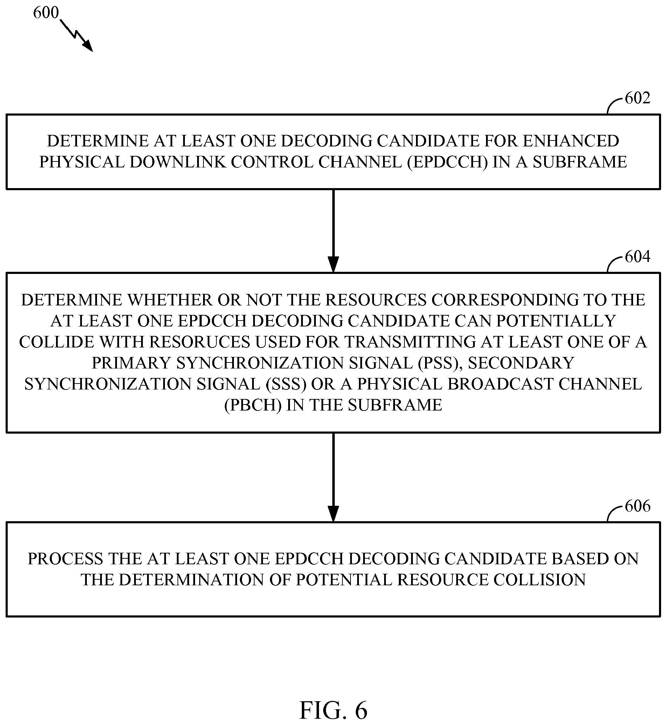

**FIG. 6** illustrates example operations 600 that may be performed by a User Equipment (UE) for monitoring and decoding EPDCCH, in accordance with certain aspects of the present disclosure. Operations 600 may begin, at 602, by determining at least one decoding candidate for EPDCCH in a subframe. At 604, the UE may determine whether or not the resources corresponding to the at least one EPDCCH decoding candidate can potentially collide with resources used for transmitting at least one of PSS, SSS or PBCH in the subframe. At 606, the UE may process the at least one EPDCCH decoding candidate based on the determination of potential resource collision.

According to certain aspects, the UE may receive a configuration of EPDCCH resources and determine the at least one EPDCCH decoding candidate based on the received configuration. Further, the UE may determine the resources corresponding to the at least one EPDCCH decoding candidate based on the received configuration.

According to certain aspects, the UE may determine validity of the at least one EPDCCH decoding candidate based, at least in part, on the determination of the potential resource collision. According to certain aspects, the UE may declare the at least one EPDCCH decoding candidate as a valid candidate if the resources corresponding to the candidate do not potentially collide with the resources used by at least one of the PSS, SSS, or PBCH. According to certain aspects, processing the EPDCCH candidate may include monitoring and decoding the EPDCCH candidate-only if it is determined to be a valid candidate.

According to certain aspects, the UE may declare the EPDCCH candidate as an invalid candidate if the resources corresponding to the candidate potentially collide with the resources used by at least one of the PSS, SSS or PBCH. According to certain aspects, processing the EPDCCH candidate may include not monitoring for a particular candidate if it is determined to an invalid candidate.

According to certain aspects, determining if the resources corresponding to the EPDCCH candidate can potentially collide with resources used for transmitting at least one of the PSS, SSS or PBCH may include determining if the candidate and at least one of the PSS, SSS or PBCH use a same resource based on a comparison of the resources corresponding to the EPDCCH decoding candidate and the resources used for transmitting at least one of the PSS, SSS or PBCH.

According to certain aspects, determining if the resources corresponding to the EPDCCH candidate can potentially collide with resources used for transmitting at least one of the PSS, SSS or PBCH may include determining if the EPDCCH candidate and at least one of the PSS, SSS or PBCH use a same physical resource block (PRB) pair, based on a comparison of a set of PRB pairs associated with EPDCCH resources and a set of PRB pairs used for transmitting at least one of the PSS, SSS or PBCH.

According to certain aspects, the resources corresponding to at least one EPDCCH decoding candidate includes at least one PRB pair of a set of PRB pairs used for transmission of at least one of the PSS, SSS or PBCH. According to certain aspects, the at least one PRB pair is assigned such that resources in the at least one PRB pair assigned to at least one of the PSS, SSS or PBCH are not assigned for EPDCCH transmission, and resources in the at least one PRB pair not assigned to at least one of the PSS, SSS or PBCH are assigned for EPDCCH transmission.

According to certain aspects the at least one EPDCCH decoding candidate is based on a DMRS, and the resources corresponding to the candidate includes resources used by the DMRS. According to certain aspects, in a subframe comprising of two slots, the DMRS is located in at least one symbol not occupied by at least one of the PSS or SSS in a same slot as the at least one of the PSS or SSS. According to certain aspects, the DMRS is located only in symbols not occupied by at least one of the PSS or SSS. According to certain aspects, the DMRS is located at least in one symbol originally occupied by at least one of PSS or SSS of a legacy type.

According to certain aspects, the at least one EPDCCH decoding candidate scheduling a transmission on a first carrier is transmitted on a second carrier different from the first carrier.

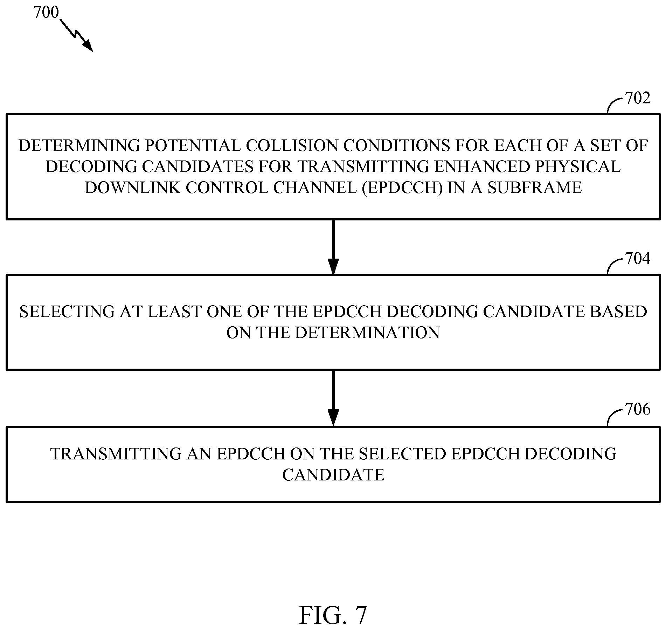

**FIG.** 7 illustrates example operations 700 that may be performed by a Base Station (BS) for transmitting EPDCCH, in accordance with certain aspects of the present disclosure. Operations 700 may begin, at 702, with the BS determining potential collision conditions for each of a set of decoding candidates for transmitting Enhanced Physical Downlink Control Channel (EPDCCH) in a subframe. At 704, the BS may select at least one of the EPDCCH decoding candidates based on the determination. At 706, the BS transmits an EPDCCH on the selected EPDCCH decoding candidate.

According to certain aspects, the BS selects at least one decoding candidate if resources corresponding to the candidate do not collide with the resources used for transmitting at least one of the PSS, SSS, or PBCH in the subframe. In certain aspects, the BS determining the potential collision conditions may include determining if the EPDCCH decoding candidate and at least one of the PSS, SSS or PBCH use a same resource based on a comparison of the resources corresponding to the EPDCCH decoding candidate and the resources used for transmitting at least one of the PSS, SSS or PBCH.

According to certain aspects, determining the potential collision conditions may include determining if the EPDCCH decoding candidate and at least one of the PSS, SSS or PBCH use a same PRB pair, based on a comparison of a set of PRB pairs associated with EPDCCH resources and a set of PRB pairs used for transmitting at least one of the PSS, SSS or PBCH.

In certain aspects, the resources corresponding to the at least one EPDCCH decoding candidate includes at least one PRB pair of a set of PRB pairs used for transmission of at least one of the PSS, SSS or PBCH. In an aspect the at least one PRB pair is scheduled such that resources in the at least one PRB pair assigned to at least one of the PSS, SSS or PBCH are not assigned for EPDCCH transmission, and resources in the at least one PRB pair not assigned to at least one of the PSS, SSS or PBCH are assigned for EPDCCH transmission.

According to certain aspects, the at least one EPDCCH decoding candidate is based on DMRS, and resources corresponding to the at least one EPDCCH decoding candidate comprise resources used by the DMRS. In an aspect, in a subframe comprising of two slots, the DMRS is located in at least one symbol not occupied by at least one of the PSS or SSS in a same slot as the at least one of the PSS or SSS. In an aspect the DMRS is located only in symbols not occupied by at least one of the PSS or SSS. In an aspect, the DMRS is located at least in one symbol originally occupied by at least one of PSS or SSS of a legacy type.

According to certain aspects, the resources corresponding to each EPDCCH decoding candidate includes at least one PRB. In an aspect, resources used for transmitting at least one of the PSS, SSS or PBCH includes at least one PRB.

Those of skill in the art would understand that information and signals may be represented using any of a variety of different technologies and techniques. For example, data, instructions, commands, information, signals, bits, symbols and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits and algorithm steps described in connection with the disclosure herein may be implemented as electronic hardware, computer software, or combinations of both. To clearly illustrate this interchangeability of hardware and software, various illustrative components, blocks, modules, circuits and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components or any combination thereof designed to perform the functions described herein. A general-purpose processor may be a microprocessor, but in the alternative, the processor may be any conventional processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the disclosure herein may be embodied directly in hardware, in a software/firmware module executed by a processor, or in a combination of the two. A software/firmware module may reside in RAM memory, flash memory, ROM memory, EPROM memory, EEPROM memory, registers, hard disk, a removable disk, a CD-ROM or any other form of storage medium known in the art. An exemplary storage medium is coupled to the processor such that the processor can read information from, and/or write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal. Generally, where there are operations illustrated in Figures, those operations may have corresponding counterpart means-plus-function components with similar numbering.

In one or more exemplary designs, the functions described may be implemented in hardware, software/firmware or combinations thereof. If implemented in software/firmware, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where *disks* usually reproduce data magnetically, while *discs* reproduce data optically with lasers. Combinations of the above should also be included within the scope of computer-readable media.

The previous description of the disclosure is provided to enable any person skilled in the art to make or use the disclosure. Various modifications to the disclosure will be readily apparent to those skilled in the art, and the generic principles defined herein may be applied to other variations without departing from the scope of the disclosure. Thus, the disclosure is not intended to be limited to the examples and designs described herein, but is to be accorded the widest scope consistent with the principles and novel features disclosed herein.

In the following further examples are described to facilitate the understanding of this invention.

In a first further example a method for wireless communication by a User Equipment is described, comprising determining at least one decoding candidate for Enhanced Physical Downlink Control Channel (EPDCCH) in a subframe; determining whether or not the resources corresponding to the at least one EPDCCH decoding candidate can potentially collide with resources used for transmitting at least one of a Primary Synchronization Signal (PSS), Secondary Synchronization Signal (SSS) or a Physical Broadcast Channel (PBCH) in the subframe; and processing the at least one EPDCCH decoding candidate based on the determination of potential resource collision. The method may further comprise receiving a configuration of EPDCCH resources; and determining the at least one EPDCCH decoding candidate based on the received configuration. Also, the method may further comprise determining the resources corresponding to the at least one EPDCCH decoding candidate based on the received configuration. Also, further comprising determining validity of the at least one EPDCCH decoding candidate based, at least in part, on the determination of the potential resource collision. Also, determining the validity of the at least one EPDCCH decoding candidate may comprise declaring the at least one EPDCCH decoding candidate as a valid candidate if the resources corresponding to the at least one EPCDDH decoding candidate does not potentially collide with the resources used by at least one of the PSS, SSS or PBCH. Also, processing the at least one EPDCCH decoding candidate may comprise monitoring and decoding the at least one EPDCCH decoding candidate if the at least one EPDCCH decoding candidate is determined to be valid. Also, determining the validity of the at least one EPDCCH decoding candidate may comprise declaring the at least one EPDCCH decoding candidate as an invalid candidate if the resources corresponding to the at least one EPDCCH decoding candidate potentially collide with the resources used by at least one of the PSS, SSS or PBCH. Further, processing the at least one EPDCCH decoding candidate may comprise skipping monitoring the at least one EPDCCH decoding candidate if the at least one EPDCCH decoding candidate is determined to be invalid. Also, determining if the resources corresponding to the at least one EPDCCH decoding candidate can potentially collide with resources used for transmitting at least one of the PSS, SSS or PBCH may comprise determining if the at least one EPDCCH decoding candidate and at least one of the PSS, SSS or PBCH use a same resource based on a comparison of the resources corresponding to the at least one EPDCCH decoding candidate and the resources used for transmitting at least one of the PSS, SSS or PBCH. Further, determining if the resources corresponding to the at least one EPDCCH decoding candidate can potentially collide with resources used for transmitting at least one of the PSS, SSS or PBCH may comprise determining if the at least one EPDCCH decoding candidate and at least one of the PSS, SSS or PBCH use a same physical resource block (PRB) pair, based on a comparison of a set of PRB pairs associated with EPDCCH resources and a set of PRB pairs used for transmitting at least one of the PSS, SSS or PBCH. Also, the resources corresponding to at least one EPDCCH decoding candidate may include at least one physical resource block (PRB) pair of a set of PRB pairs used for transmission of at least one of the PSS, SSS or PBCH such that resources in the at least one PRB pair assigned to at least one of the PSS, SSS or PBCH are not assigned for EPDCCH transmission; and resources in the at least one PRB pair not assigned to at least one of the PSS, SSS or PBCH are assigned for EPDCCH transmission. Also, the at least one EPDCCH decoding candidate may be based on a demodulation reference signal (DMRS), and the resources corresponding to the at least one EPDCCH decoding candidate comprise resources used by the DMRS. Also, in a subframe comprising of two slots, the DMRS may be located in at least one symbol not occupied by at least one of the PSS or SSS in a same slot as the at least one of the PSS or SSS. Further, the DMRS may be located only in symbols not occupied by at least one of the PSS or SSS. Also, the DMRS may be located at least in one symbol originally occupied by at least one of PSS or SSS of a legacy type. Further, the at least one EPDCCH decoding candidate scheduling a transmission on a first carrier may be transmitted on a second carrier different from the first carrier. Also, the resources corresponding to the at least one EPDCCH decoding candidate might include at least one Physical Resource Block Pair. Further, the resources used for transmitting at least one of the PSS, SSS or PBCH may include at least one Physical Resource Block Pair.

In a further example an apparatus for wireless communication is described, comprising means for determining at least one decoding candidate for Enhanced Physical Downlink Control Channel (EPDCCH) in a subframe; means for determining whether or not the resources corresponding to the at least one EPDCCH decoding candidate can potentially collide with resources used for transmitting at least one of a Primary Synchronization Signal (PSS), Secondary Synchronization Signal (SSS) or a Physical Broadcast Channel (PBCH) in the subframe; and means for processing the at least one EPDCCH decoding candidate based on the determination of potential resource collision. Also, the apparatus may further comprise means for determining validity of the at least one EPDCCH decoding candidate based, at least in part, on the determination of the potential resource collision. Further, the means for determining the validity of the at least one EPDCCH decoding candidate may be configured to declare the at least one EPDCCH decoding candidate as a valid candidate if the resources corresponding to the at least one EPCDDH decoding candidate does not potentially collide with the resources used by at least one of the PSS, SSS or PBCH. Also, the means for processing the at least one EPDCCH decoding candidate might be configured to monitor and decode the at least one EPDCCH decoding candidate if the at least one EPDCCH decoding candidate is determined to be valid. Further, the means for determining the validity of the at least one EPDCCH decoding candidate might be configured to declare the at least one EPDCCH decoding candidate as an invalid candidate if the resources corresponding to the at least one EPDCCH decoding candidate potentially collide with the resources used by at least one of the PSS, SSS or PBCH. Also, the means for processing the at least one EPDCCH decoding candidate might be configured to skip monitoring the at least one EPDCCH decoding candidate if the at least one EPDCCH decoding candidate is determined to be invalid. Further, the at least one EPDCCH decoding candidate might be based on a demodulation reference signal (DMRS), and the resources corresponding to the at least one EPDCCH decoding candidate may comprise resources used by the DMRS. Also, in a subframe comprising of two slots, the DMRS might be located in at least one symbol not occupied by at least one of the PSS or SSS in a same slot as the at least one of the PSS or SSS. Further, the DMRS might be located only in symbols not occupied by at least one of the PSS or SSS. Also, the DMRS might be located at least in one symbol originally occupied by at least one of PSS or SSS of a legacy type. Further, the at least one EPDCCH decoding candidate scheduling a transmission on a first carrier might be transmitted on a second carrier different from the first carrier.

In yet another further example an apparatus for wireless communication is described, comprising: at least one processor configured to: determine at least one decoding candidate for Enhanced Physical Downlink Control Channel (EPDCCH) in a subframe; determine whether or not the resources corresponding to the at least one EPDCCH decoding candidate can potentially collide with resources used for transmitting at least one of a Primary Synchronization Signal (PSS), Secondary Synchronization Signal (SSS) or a Physical Broadcast Channel (PBCH) in the subframe; and process the at least one EPDCCH decoding candidate based on the determination of potential resource collision; and a memory coupled to the at least one processor.

In another further example a computer program product for wireless communication is described, comprising: a computer-readable medium comprising code for: determining at least one decoding candidate for Enhanced Physical Downlink Control Channel (EPDCCH) in a subframe; determining whether or not the resources corresponding to the at least one EPDCCH decoding candidate can potentially collide with resources used for transmitting at least one of a Primary Synchronization Signal (PSS), Secondary Synchronization Signal (SSS) or a Physical Broadcast Channel (PBCH) in the subframe; and processing the at least one EPDCCH decoding candidate based on the determination of potential resource collision.

In yet another further example a method for wireless communications by a Base Station (BS) is described, comprising determining potential collision conditions for each of a set of decoding candidates for transmitting Enhanced Physical Downlink Control Channel (EPDCCH) in a subframe; selecting at least one EPDCCH decoding candidate from the set based on the determination; and transmitting an EPDCCH on the selected EPDCCH decoding candidate. Further, the selecting may comprise selecting the at least one EPDCCH decoding candidate if resources corresponding to the candidate do not collide with the resources used for transmitting at least one of the PSS, SSS or PBCH in the subframe. Also the determining may comprise determining if the at least one EPDCCH decoding candidate and at least one of the PSS, SSS or PBCH use a same resource based on a comparison of the resources corresponding to the EPDCCH decoding candidate and the resources used for transmitting at least one of the PSS, SSS or PBCH. Further, the determining may comprise determining if the at least one EPDCCH decoding candidate and at least one of the PSS, SSS or PBCH use a same physical resource block (PRB) pair, based on a comparison of a set of PRB pairs associated with EPDCCH resources and a set of PRB pairs used for transmitting at least one of the PSS, SSS or PBCH. Also, the resources corresponding to the at least one EPDCCH decoding candidate may include at least one physical resource block (PRB) pair of a set of PRB pairs used for transmission of at least one of the PSS, SSS or PBCH such that resources in the at least one PRB pair assigned to at least one of the PSS, SSS or PBCH are not assigned for EPDCCH transmission; and resources in the at least one PRB pair not assigned to at least one of the PSS, SSS or PBCH are assigned for EPDCCH transmission. Further, the at least one EPDCCH decoding candidate might be based on a demodulation reference signal (DMRS), and resources corresponding to the at least one EPDCCH decoding candidate might comprise resources used by the DMRS. Further, in a subframe comprising of two slots, the DMRS might be located in at least one symbol not occupied by at least one of the PSS or SSS in a same slot as the at least one of PSS or SSS. Further, the DMRS might be located only in symbols not occupied by at least one of the PSS or SSS. Also, the DMRS might be located at least in one symbol originally occupied by at least one of PSS or SSS of a legacy type. Further, resources corresponding to each EPDCCH decoding candidate may include at least one Physical Resource Block Pair. Also, resources used for transmitting at least one of the PSS, SSS or PBCH may include at least one Physical Resource Block Pair.

In another further example an apparatus for wireless communications is described, comprising means for determining potential collision conditions for each of a set of decoding candidates for transmitting Enhanced Physical Downlink Control Channel (EPDCCH) in a subframe; means for selecting at least one EPDCCH decoding candidate from the set based on the determination; and means for transmitting an EPDCCH on the selected EPDCCH decoding candidate. Also, the means for selecting might be configured to select the at least one EPDCCH decoding candidate if resources corresponding to the candidate do not collide with the resources used for transmitting at least one of the PSS, SSS or PBCH in the subframe. Further, the means for determining might be configured to determine if the at least one EPDCCH decoding candidate and at least one of the PSS, SSS or PBCH use a same resource based on a comparison of the resources corresponding to the EPDCCH decoding candidate and the resources used for transmitting at least one of the PSS, SSS or PBCH. Also, the means for determining might be configured to determine if the at least one EPDCCH decoding candidate and at least one of the PSS, SSS or PBCH use a same physical resource block (PRB) pair, based on a comparison of a set of PRB pairs associated with EPDCCH resources and a set of PRB pairs used for transmitting at least one of the PSS, SSS or PBCH. Also, the resources corresponding to the at least one EPDCCH decoding candidate might include at least one physical resource block (PRB) pair of a set of PRB pairs used for transmission of at least one of the PSS, SSS or PBCH such that resources in the at least one PRB pair assigned to at least one of the PSS, SSS or PBCH are not assigned for EPDCCH transmission; and resources in the at least one PRB pair not assigned to at least one of the PSS, SSS or PBCH are assigned for EPDCCH transmission. Also, the at least one EPDCCH decoding candidate might be based on a demodulation reference signal (DMRS), and resources corresponding to the at least one EPDCCH decoding candidate may comprise resources used by the DMRS. Also, in a sub frame comprising of two slots, the DMRS might be located in at least one symbol not occupied by at least one of the PSS or SSS in a same slot as the at least one of PSS or SSS. Further, the DMRS might be located only in symbols not occupied by at least one of the PSS or SSS. Also, the DMRS might be located at least in one symbol originally occupied by at least one of PSS or SSS of a legacy type.

In yet another further example an apparatus for wireless communications is described, comprising at least one processor configured to determine potential collision conditions for each of a set of decoding candidates for transmitting Enhanced Physical Downlink Control Channel (EPDCCH) in a subframe; select at least one EPDCCH decoding candidate from the set based on the determination; and transmit an EPDCCH on the selected EPDCCH decoding candidate; and a memory coupled to the at least one processor.

In another further example a computer program product for wireless communications is described, comprising a computer-readable medium comprising code for determining potential collision conditions for each of a set of decoding candidates for transmitting Enhanced Physical Downlink Control Channel (EPDCCH) in a subframe; selecting at least one EPDCCH decoding candidate from the set based on the determination; and transmitting an EPDCCH on the selected EPDCCH decoding candidate.

## Claims

1. A method for wireless communication by a User Equipment, comprising:
determining (602) at least one decoding candidate for Enhanced Physical Downlink Control Channel, EPDCCH in a subframe;
determining (604) whether or not the resources corresponding to the at least one EPDCCH decoding candidate collide with resources used for transmitting at least one of a Primary Synchronization Signal, PSS, Secondary Synchronization Signal, SSS, or a Physical Broadcast Channel, PBCH, in the subframe;
determining validity of the at least one EPDCCH decoding candidate based, at least in part, on the determination of the potential resource collision, wherein the at least one EPDCCH decoding candidate is declared as a valid candidate if the resources corresponding to the at least one EPDCCH decoding candidate do not collide with the resources used by at least one of the PSS, SSS or PBCH; and
processing (606) the at least one EPDCCH decoding candidate based on the determination of potential resource collision,
wherein the at least one EPDCCH decoding candidate is monitored or decoded if the at least one EPDCCH decoding candidate is determined to be valid.

2. The method of claim 1, further comprising:
receiving a configuration of EPDCCH resources; and
determining the at least one EPDCCH decoding candidate based on the received configuration.

3. The method of claim 2, further comprising:
determining the resources corresponding to the at least one EPDCCH decoding candidate based on the received configuration.

4. The method of claim 1, wherein the at least one EPDCCH decoding candidate is based on a demodulation reference signal, DMRS, and the resources corresponding to the at least one EPDCCH decoding candidate comprise resources used by the DMRS.

5. The method of claim 4, wherein in a subframe comprising of two slots, the DMRS is located in at least one symbol not occupied by at least one of the PSS or SSS in a same slot as the at least one of the PSS or SSS.

6. The method of claim 4, wherein the DMRS is located only in symbols not occupied by at least one of the PSS or SSS.

7. The method of claim 4, wherein the DMRS is located at least in one symbol originally occupied by at least one of PSS or SSS of a legacy type.

8. The method of claim 1, wherein the at least one EPDCCH decoding candidate scheduling a transmission on a first carrier is transmitted on a second carrier different from the first carrier.

9. An apparatus for wireless communication, comprising:
means for determining at least one decoding candidate for Enhanced Physical Downlink Control Channel, EPDCCH, in a subframe;
means for determining whether or not the resources corresponding to the at least one EPDCCH decoding candidate collide with resources used for transmitting at least one of a Primary Synchronization Signal, PSS, Secondary Synchronization Signal, SSS, or a Physical Broadcast Channel, PBCH in the subframe;
means for determining validity of the at least one EPDCCH decoding candidate based, at least in part, on the determination of the potential resource collision, wherein the at least one EPDCCH decoding candidate is declared as a valid candidate if the resources corresponding to the at least one EPDCCH decoding candidate do not collide with the resources used by at least one of the PSS, SSS or PBCH; and
means for processing the at least one EPDCCH decoding candidate based on the determination of potential resource collision, wherein the at least one EPDCCH decoding candidate is monitored or decoded if the at least one EPDCCH decoding candidate is determined to be valid.

10. A method for wireless communications by a Base Station, BS, comprising:
determining (702) potential collision conditions for each of a set of decoding candidates for transmitting Enhanced Physical Downlink Control Channel, EPDCCH, in a subframe;
selecting (704) at least one EPDCCH decoding candidate from the set based on the determination, wherein at least one EPDCCH decoding candidate is selected, if resources corresponding to the candidate do not collide with resources used for transmitting at least one of a Primary Synchronization Signal, PSS, Secondary Synchronization Signal, SSS, or a Physical Broadcast Channel, PBCH, in the subframe; and
transmitting (706) an EPDCCH on the selected EPDCCH decoding candidate.

11. An apparatus for wireless communications, comprising:
means for determining potential collision conditions for each of a set of decoding candidates for transmitting Enhanced Physical Downlink Control Channel, EPDCCH, in a subframe;
means for selecting at least one EPDCCH decoding candidate from the set based on the determination, wherein at least one EPDCCH decoding candidate is selected, if resources corresponding to the candidate do not collide with resources used for transmitting at least one of a Primary Synchronization Signal, PSS, Secondary Synchronization Signal, SSS, or a Physical Broadcast Channel, PBCH, in the subframe; and
means for transmitting an EPDCCH on the selected EPDCCH decoding candidate.

12. A computer program product for wireless communications, comprising:
a computer-readable medium comprising code for causing a computer when executed in such computer to perform a method according to any of claims 1 to 8 or 10.

## Patentansprüche

1. Ein Verfahren zur drahtlosen Kommunikation durch ein Benutzergerät, aufweisend:
Bestimmen (602) mindestens eines Dekodierungskandidaten für erweiterten physikalischen Abwärtsverbindungssteuerkanal, EPDCCH, in einem Unterrahmen;
Bestimmen (604), ob die Ressourcen, die dem mindestens einen EPDCCH-Dekodierungskandidaten entsprechen, mit Ressourcen, die zum Übertragen mindestens eines primären Synchronisationssignals, PSS, sekundären Synchronisationssignals, SSS, oder eines physikalischen Broadcastkanals, PBCH, in dem Unterrahmen verwendet werden, kollidieren oder nicht;
Bestimmen der Gültigkeit des mindestens einen EPDCCH-Dekodierungskandidaten, basierend zumindest teilweise auf der Bestimmung der potentiellen Ressourcenkollision, wobei der mindestens eine EPDCCH-Dekodierungskandidat als gültiger Kandidat deklariert wird, wenn die Ressourcen, die dem mindestens einen EPDCCH-Dekodierungskandidaten entsprechen, nicht mit den Ressourcen kollidieren, die von mindestens einem der PSS, SSS oder PBCH verwendet werden; und
Verarbeiten (606) des mindestens einen EPDCCH-Dekodierungskandidaten basierend auf dem Bestimmen einer möglichen Ressourcenkollision, wobei der mindestens eine EPDCCH-Dekodierungskandidat überwacht oder dekodiert wird, wenn der mindestens eine EPDCCH-Dekodierungskandidat als gültig bestimmt wird.

2. Das Verfahren nach Anspruch 1, weiter aufweisend:
Empfangen einer Konfiguration von EPDCCH-Ressourcen; und
Bestimmen des mindestens einen EPDCCH-Dekodierungskandidaten basierend auf der empfangenen Konfiguration.

3. Verfahren nach Anspruch 2, weiter aufweisend:
Bestimmen der Ressourcen, die dem mindestens einen EPDCCH-Dekodierungskandidaten entsprechen, basierend auf der empfangenen Konfiguration.

4. Das Verfahren nach Anspruch 1, wobei der mindestens eine EPDCCH-Dekodierungskandidat auf einem Demodulationsreferenzsignal, DMRS, basiert und die dem mindestens einen EPDCCH-Dekodierungskandidaten entsprechenden Ressourcen Ressourcen aufweisen, die von dem DMRS verwendet werden.

5. Das Verfahren nach Anspruch 4, wobei in einem Unterrahmen, der aus zwei Schlitzen besteht, das DMRS in mindestens einem Symbol angeordnet ist, das nicht von mindestens einem der PSS oder SSS in einem gleichen Schlitz wie das mindestens eine der PSS oder SSS besetzt ist.

6. Das Verfahren nach Anspruch 4, wobei das DMRS nur in Symbolen angeordnet ist, die nicht von mindestens einem der PSS oder SSS besetzt sind.

7. Das Verfahren nach Anspruch 4, wobei sich das DMRS mindestens in einem Symbol befindet, das ursprünglich durch mindestens einen von PSS oder SSS eines Legacy-Typs besetzt war.

8. Das Verfahren nach Anspruch 1, wobei der mindestens eine EPDCCH-Dekodierungskandidat, der eine Übertragung auf einem ersten Träger plant, auf einem zweiten Träger übertragen wird, der sich von dem ersten Träger unterscheidet.

9. Eine Vorrichtung zur drahtlosen Kommunikation, aufweisend:
Mittel zum Bestimmen mindestens eines Dekodierungskandidaten für erweiterten physikalischen Abwärtsverbindungssteuerkanal, EPDCCH, in einem Unterrahmen;
Mittel zum Bestimmen, ob die Ressourcen, die dem mindestens einen EPDCCH-Dekodierungskandidaten entsprechen, mit Ressourcen, die zum Übertragen mindestens eines primären Synchronisationssignals, PSS, sekundären Synchronisationssignals, SSS, oder eines physikalischen Broadcastkanals, PBCH, in dem Unterrahmen verwendet werden, kollidieren oder nicht;
Mittel zum Bestimmen der Gültigkeit des mindestens einen EPDCCH-Dekodierungskandidaten, basierend zumindest teilweise auf der Bestimmung der potentiellen Ressourcenkollision, wobei der mindestens eine EPDCCH-Dekodierungskandidat als gültiger Kandidat deklariert wird, wenn die Ressourcen, die dem mindestens einen EPDCCH-Dekodierungskandidaten entsprechen, nicht mit den Ressourcen kollidieren, die von mindestens einem der PSS, SSS oder PBCH verwendet werden; und
Mittel zum Verarbeiten des mindestens einen EPDCCH-Dekodierungskandidaten basierend auf dem Bestimmen einer möglichen Ressourcenkollision, wobei der mindestens eine EPDCCH-Dekodierungskandidat überwacht oder dekodiert wird, wenn der mindestens eine EPDCCH-Dekodierungskandidat als gültig bestimmt wird.

10. Ein Verfahren zur drahtlosen Kommunikation durch eine Basisstation, BS, aufweisend:
Bestimmen (702) potentieller Kollisionsbedingungen für jeden aus einem Satz von Dekodierkandidaten zum Übertragen von erweitertem physikalischen Abwärtsverbindungssteuerkanal, EPDCCH, in einem Unterrahmen;
Auswählen (704) mindestens eines EPDCCH-Dekodierungskandidaten aus dem Satz basierend auf der Bestimmung, wobei mindestens ein EPDCCH-Dekodierungskandidat ausgewählt wird, wenn Ressourcen, die dem Kandidaten entsprechen, nicht mit Ressourcen kollidieren, die zum Übertragen mindestens eines primären Synchronisationssignals, PSS, sekundären Synchronisationssignals, SSS, oder eines physikalischen Broadcastkanals, PBCH, in dem Unterrahmen verwendet werden; und
Übertragen (706) eines EPDCCH auf dem ausgewählten EPDCCH-Dekodierungskandidaten.

11. Eine Vorrichtung für drahtlose Kommunikation, aufweisend:
Mittel zum Bestimmen potentieller Kollisionsbedingungen für jeden aus einem Satz von Dekodierkandidaten zum Übertragen von erweitertem physikalischen Abwärtsverbindungssteuerkanal, EPDCCH, in einem Unterrahmen;
Mittel zum Auswählen mindestens eines EPDCCH-Dekodierungskandidaten aus dem Satz basierend auf der Bestimmung,
wobei mindestens ein EPDCCH-Dekodierungskandidat ausgewählt wird, wenn Ressourcen, die dem Kandidaten entsprechen, nicht mit Ressourcen kollidieren, die zum Übertragen mindestens eines primären Synchronisationssignals, PSS, sekundären Synchronisationssignals, SSS, oder eines physikalischen Broadcastkanals, PBCH, in dem Unterrahmen verwendet werden; und
Mittel zum Übertragen eines EPDCCH auf dem ausgewählten EPDCCH-Dekodierungskandidaten.

12. Ein Computerprogrammprodukt für drahtlose Kommunikation, aufweisend:
ein computerlesbares Medium, aufweisend Code, um einen Computer zu veranlassen, ein Verfahren nach einem der Ansprüche 1 bis 8 oder 10 durchzuführen, wenn er in einem derartigen Computer ausgeführt wird.

## Revendications

1. Procédé de communication sans fil par un équipement utilisateur, comprenant :
la détermination (602) d'au moins un candidat de décodage pour un canal physique de contrôle de liaison descendante amélioré, EPDCCH, dans une sous-trame ;
la détermination (604) si les ressources correspondant à l'au moins un candidat de décodage d'EPDCCH entrent ou non en collision avec des ressources utilisées pour transmettre au moins un parmi un signal de synchronisation primaire, PSS, un signal de synchronisation secondaire, SSS, ou un canal physique de diffusion, PBCH, dans la sous-trame ;
la détermination d'une validité de l'au moins un candidat de décodage d'EPDCCH sur la base, au moins en partie, de la détermination de la collision potentielle de ressources, dans lequel l'au moins un candidat de décodage d'EPDCCH est déclaré candidat valide si les ressources correspondant à l'au moins un candidat de décodage d'EPDCCH n'entrent pas en collision avec les ressources utilisées par au moins un parmi le PSS, le SSS ou le PBCH ; et
le traitement (606) de l'au moins un candidat de décodage d'EPDCCH sur la base de la détermination d'une collision potentielle de ressources, dans lequel l'au moins un candidat de décodage d'EPDCCH est surveillé ou décodé si l'au moins un candidat de décodage d'EPDCCH est déterminé comme étant valide.

2. Procédé selon la revendication 1, comprenant en outre :
la réception d'une configuration de ressources d'EPDCCH ; et
la détermination de l'au moins un candidat de décodage d'EPDCCH sur la base de la configuration reçue.

3. Procédé selon la revendication 2, comprenant en outre :
la détermination des ressources correspondant à l'au moins un candidat de décodage d'EPDCCH sur la base de la configuration reçue.

4. Procédé selon la revendication 1, dans lequel l'au moins un candidat de décodage d'EPDCCH est basé sur un signal de référence de démodulation, DMRS, et les ressources correspondant à l'au moins un candidat de décodage d'EPDCCH comprennent des ressources utilisées par le DMRS.

5. Procédé selon la revendication 4, dans lequel, dans une sous-trame constituée de deux intervalles, le DMRS est situé dans au moins un symbole non occupé par au moins un du PSS ou du SSS dans un même intervalle comme l'au moins un parmi le PSS ou le SSS.

6. Procédé selon la revendication 4, dans lequel le DMRS est situé seulement dans des symboles non occupés par au moins un du PSS ou du SSS.

7. Procédé selon la revendication 4, dans lequel le DMRS est situé au moins dans un symbole initialement occupé par au moins un d'un PSS ou d'un SSS d'un type d'ancienne génération.

8. Procédé selon la revendication 1, dans lequel l'au moins un candidat de décodage d'EPDCCH planifiant une transmission sur une première porteuse est transmis sur une deuxième porteuse différente de la première porteuse.

9. Appareil de communication sans fil comprenant :
des moyens pour déterminer au moins un candidat de décodage pour un canal physique de contrôle de liaison descendante amélioré, EPDCCH, dans une sous-trame ;
des moyens pour déterminer si les ressources correspondant à l'au moins un candidat de décodage d'EPDCCH entrent ou non en collision avec des ressources utilisées pour transmettre au moins un parmi un signal de synchronisation primaire, PSS, un signal de synchronisation secondaire, SSS, ou un canal physique de diffusion, PBCH, dans la sous-trame ;
des moyens pour déterminer une validité de l'au moins un candidat de décodage d'EPDCCH sur la base, au moins en partie, de la détermination de la collision potentielle de ressources, dans lequel l'au moins un candidat de décodage d'EPDCCH est déclaré candidat valide si les ressources correspondant à l'au moins un candidat de décodage d'EPDCCH n'entrent pas en collision avec les ressources utilisées par au moins un parmi le PSS, le SSS ou le PBCH ; et
des moyens pour traiter l'au moins un candidat de décodage d'EPDCCH sur la base de la détermination d'une collision potentielle de ressources, dans lequel l'au moins un candidat de décodage d'EPDCCH est surveillé ou décodé si l'au moins un candidat de décodage d'EPDCCH est déterminé comme étant valide.

10. Procédé de communication sans fil par une station de base, BS, comprenant :
la détermination (702) de conditions de collisions potentielles pour chacun d'un ensemble de candidats de décodage pour transmettre un canal physique de contrôle de liaison descendante amélioré, EPDCCH, dans une sous-trame ;
la sélection (704) d'au moins un candidat de décodage d'EPDCCH à partir de l'ensemble sur la base de la détermination, dans lequel au moins un candidat de décodage d'EPDCCH est sélectionné, si des ressources correspondant au candidat n'entrent pas en collision avec des ressources utilisées pour transmettre au moins un parmi un signal de synchronisation primaire, PSS, un signal de synchronisation secondaire, SSS, ou un canal physique de diffusion, PBCH, dans la sous-trame ; et
la transmission (706) d'un EPDCCH sur le candidat de décodage d'EPDCCH sélectionné.

11. Appareil de communication sans fil comprenant :
des moyens pour déterminer des conditions de collisions potentielles pour chacun d'un ensemble de candidats de décodage pour transmettre un canal physique de contrôle de liaison descendante amélioré, EPDCCH, dans une sous-trame ;
des moyens pour sélectionner au moins un candidat de décodage d'EPDCCH à partir de l'ensemble sur la base de la détermination, dans lequel au moins un candidat de décodage d'EPDCCH est sélectionné, si des ressources correspondant au candidat n'entrent pas en collision avec des ressources utilisées pour transmettre au moins un parmi un signal de synchronisation primaire, PSS, un signal de synchronisation secondaire, SSS, ou un canal physique de diffusion, PBCH, dans la sous-trame ; et
des moyens pour transmettre un EPDCCH sur le candidat de décodage d'EPDCCH sélectionné.

12. Produit de programme informatique pour des communications sans fil, comprenant :
un support lisible par ordinateur comprenant du code pour amener un ordinateur, quand il est exécuté sur cet ordinateur, à mettre en oeuvre un procédé selon l'une des revendications 1 à 8 ou 10.
